# EUROPEAN PATENT SPECIFICATION

(11) **EP 2 282 272 B1**
(45) Date of publication and mention of the grant of the patent: **05.12.2012**
(21) Application number: 08874250.7
(22) Date of filing: 26.12.2008
(51) Int. Cl.: G06Q 30/02, H04L 29/08, H04L 12/18

(54) **METHOD, SYSTEM AND DEVICE FOR PRESENTING ADVERTISEMENT**
VERFAHREN, SYSTEM UND EINRICHTUNG ZUR PRÄSENTATION VON WERBUNG
PROCÉDÉ, SYSTÈME ET DISPOSITIF POUR PRÉSENTER UNE PUBLICITÉ

(30) Priority: 14.05.2008 CN 200810094577
(43) Date of publication of application: 09.02.2011
(73) Proprietor: Huawei Technologies Co., Ltd., Longgang District, Shenzhen Guangdong 518129 (CN)
(72) Inventor: TAN, Yinyan, Longgang District 518129, Shenzhen (CN); SHAO, Gang, Longgang District 518129, Shenzhen (CN); FU, Pei, Longgang District 518129, Shenzhen (CN); REN, Daqi, Longgang District 518129, Shenzhen (CN)
(74) Representative: Körber, Martin Hans
(86) International application number: PCT/CN2008/073770
(87) International publication number: WO 2009/137978

(56) References cited:
- CN-A- 1 826 596
- CN-A- 1 851 741
- CN-A- 1 932 817
- CN-A- 101 022 353
- CN-A- 101 072 164
- CN-A- 101 079 063
- CN-A- 101 154 231
- US-A1- 2002 165 773

## Description

The present invention relates to the field of computer network technology, and more particularly to a method, a system, and a device for presenting an advertisement.

### BACKGROUND OF THE INVENTION

With the rapid development of the Third Generation (3G) technology and network technology, the business mode of advertisements is changed, in which Internet advertisements and mobile advertisements are dramatically increased. The so-called Internet advertisements or mobile advertisements refer to inserting advertisements in services provided by an Internet or mobile communication service provider (SP), so as to enable users to enjoy the services at a lower price or free of charge.

In the prior art, when inserting Internet advertisements or mobile advertisements, an SP specifies the occasion and position for inserting the advertisements, the number of inserted advertisements, and the like in an application content in advance. If the SP provides advertisement contents with different advertisement distribution modes for different users, a plurality of contents needs to be established, so that the work of the SP is rather complex. When the application content is at the SP, if the SP needs to change the advertisement distribution parameters such as the advertisement distribution position, time, and number of advertisements in the application content, the application content needs to be changed, which has a poor flexibility. In addition, when the advertisement content is downloaded to a local terminal and executed off-line, the SP cannot select the advertisement distribution mode used in the advertisement content flexibly according to the specific situation of the terminal or user.

Therefore, in the technical solution of the prior art, when the advertisement contents with different advertisement distribution modes are intended to be provided to different users, it may be realized in a complex manner and the flexibility is poor. In addition, as for the application content used off-line by a user, the user cannot select the advertisement distribution mode flexibly.

United States Patent Application 20020165773 discloses a method and system for distributing advertisements over network. The method of distribution of an advertisement comprising: having a communication terminal send an access request to a W W W server connected to a network to a relay server in the network, having said relay server send said access request to said W W W server, receive display data of a homepage from said WWW server, send said display data to said communication terminal, and receive advertisement data from an advertisement distribution server connected to said network and send it to said communication terminal, and having said communication terminal display a screen corresponding to said display data and advertisement corresponding to said advertisement data.

Chinese Patent Application 101154231 discloses a method and a system of applying web-page semantics; one of the main purposes of the proposal is to extract, analyze and utilize semantic contents in web-pages; for example: advertisements relevant to the contents of the web-page can be added to the web-page through semantic extraction. The web-page semantics can be analyzed by a passive voice method and an active voice method. The active voice is to operate a keyword pattern matching in a client, that is in a web-page browsing terminal, and then analyze and search the keywords existing in web-pages through a specified pattern; when the matching keywords are found, an auxiliary information request, commonly an advertisement information request, is launched to a server terminal and the advertisement information is achieved and played in a proper place. The passive voice is to pretreat the web-page to form content description files or function description files of web-page, then the function description files and the web-page are sent to the client together; the client have a logical execution according to predefined operations.

Chinese Patent Application 101154231 discloses an advertisement inter-cut system of directed stream media comprises an editing server for finalizing advertisement being up-transmitted to advertisement databank, a policy server for generating out play-out list of directed advertisement and for counting up viewed state of advertisement, a playing server for fetching advertisement data out from databank and for playing advertisement in stream mode, and a kernel databank for storing content and various information of advertisement.

### SUMMARY OF THE INVENTION

Accordingly, the present invention is directed to a method, a system, and a device for presenting an advertisement, so as to provide different advertisement distribution modes for different users simply and flexibly, and enable the users to select advertisement distribution modes flexibly when using an application content off-line.

In order to achieve the above objectives, the present invention provides according to its first aspect a method for presenting an advertisement, comprising:
receiving an application content sent by a service provider ,SP;
obtaining an advertisement distribution policy corresponding to application description information of the application content, wherein the application description information comprises one or more information of the following: an identifier, ID, a type, and a theme of the application content, and an ID of the SP; and
obtaining an advertisement according to the advertisement distribution policy and presenting the advertisement.

According to its second aspect, the present invention provides an application client, comprising in a first implementation form: a content receiving module, a policy obtaining module, an advertisement obtaining module, and an advertisement presenting module, wherein
the content receiving module is adapted to receive an application content sent by a service provider, SP;
the policy obtaining module is adapted to obtain an advertisement distribution policy corresponding to application description information of the application content received by the content receiving module, wherein the application description information comprises one or more information of the following: an identifier, ID, a type, and a theme of the application content, and an ID of the SP;
the advertisement obtaining module is adapted to obtain an advertisement according to the advertisement distribution policy obtained by the policy obtaining module; and
the advertisement presenting module is adapted to present the advertisement obtained by the advertisement obtaining module according to the advertisement distribution policy obtained by the policy obtaining module.

In its second implementation form, the advertisement client, comprises: a policy sending module and an advertisement sending module, wherein
the policy sending module is adapted to return an advertisement distribution policy response message to an application client, and the advertisement distribution policy response message carries an advertisement distribution policy corresponding to application description information, wherein the application description information comprises one or more information of the following: an identifier, ID, a type, and a theme of an application content, and an ID of the SP; and
the advertisement sending module is adapted to return an advertisement response message to the application client, and the advertisement response message carries an advertisement satisfying advertisement distribution parameters specified in the advertisement distribution policy.

According to its third aspect, the present invention provides a system for presenting an advertisement, comprising: the application client above and an advertisement client above.

In the present invention, the advertisement distribution policy corresponding to the application content is obtained by receiving the application content sent by the SP, and the advertisement is obtained according to the advertisement distribution policy and then the advertisement is presented. When different advertisement distributions are intended to be realized in the application content, only a plurality of advertisement distribution policies needs to be established, instead of changing the application content itself. Therefore, the advertisements can be presented flexibly and simply. In addition, as for the application content used off-line, flexible advertisement distribution modes can be selected by users according to different situations.

### BRIEF DESCRIPTION OF THE DRAWINGS

FIG. 1 is a flow chart of a method for presenting an advertisement according to a first embodiment of the present invention;
FIG. 2 is a flow chart of a method for presenting an advertisement according to a second embodiment of the present invention;
FIG. 3 is a flow chart of a method for presenting an advertisement according to a third embodiment of the present invention;
FIG. 4 is a flow chart of a method for presenting an advertisement according to a fourth embodiment of the present invention;
FIG. 5 is a schematic block diagram of a system for presenting an advertisement according to a fifth embodiment of the present invention;
FIG. 6 is a schematic block diagram of an application client in the system for presenting an advertisement according to the fifth embodiment of the present invention;
FIG. 7 is a schematic block diagram of an advertisement client in the system for presenting an advertisement according to the fifth embodiment of the present invention;
FIG. 8 is a schematic block diagram of an SP in the system for presenting an advertisement according to the fifth embodiment of the present invention; and
FIG. 9 is a schematic block diagram of an advertisement server in the system for presenting an advertisement according to the fifth embodiment of the present invention.

### DETAILED DESCRIPTION OF THE EMBODIMENTS

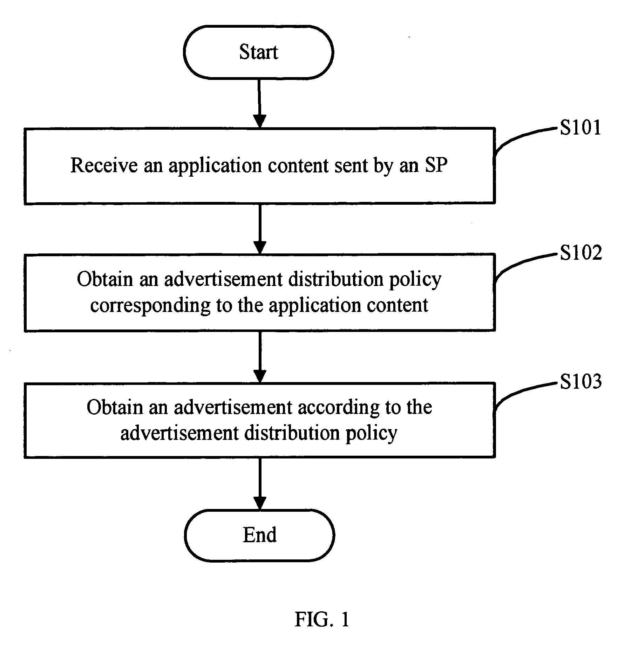

FIG. 1 is a flow chart of a method for presenting an advertisement according to a first embodiment of the present invention. Referring to FIG. 1, the method includes the following steps.

In step S101, an application content sent by an SP is received. For example, a web page content without an advertisement or an advertisement position sent by the SP is received.

In step 5102, an advertisement distribution policy corresponding to the application content is obtained. For example, according to application description information of the web page content, an advertisement distribution policy corresponding to the application description information is obtained from an advertisement client. The application description information includes an ID, a content type, and a theme of the web page, and an ID of an SP that provides the web page. The advertisement distribution policy includes different advertisement distribution policies established for different users or user groups and different advertisement distribution policies established for the same user or user group in different application scenarios.

In step S103, an advertisement is obtained according to the advertisement distribution policy and the advertisement then is presented. For example, when an advertisement occasion specified in the advertisement distribution policy occurs, an advertisement satisfying advertisement distribution parameters specified in the advertisement distribution policy is obtained from the advertisement client. The advertisement distribution parameters include the number of advertisements, and form, theme, size, and file type of an advertisement. After the advertisement is obtained, the advertisement is inserted into a position according to the advertisement distribution policy, and then the advertisement is presented to the user.

In the embodiment of the present invention, the advertisement distribution policy corresponding to the application content is obtained by receiving the application content sent by the SP, and the advertisement is obtained according to the advertisement distribution policy and then the advertisement is presented. When different advertisement distributions are intended to be realized in the application content, only a plurality of advertisement distribution policies needs to be established, instead of changing the application content itself. Therefore, the advertisements can be presented flexibly and simply. In addition, as for the application content used off-line, flexible advertisement distribution modes can be selected by users according to different situations.

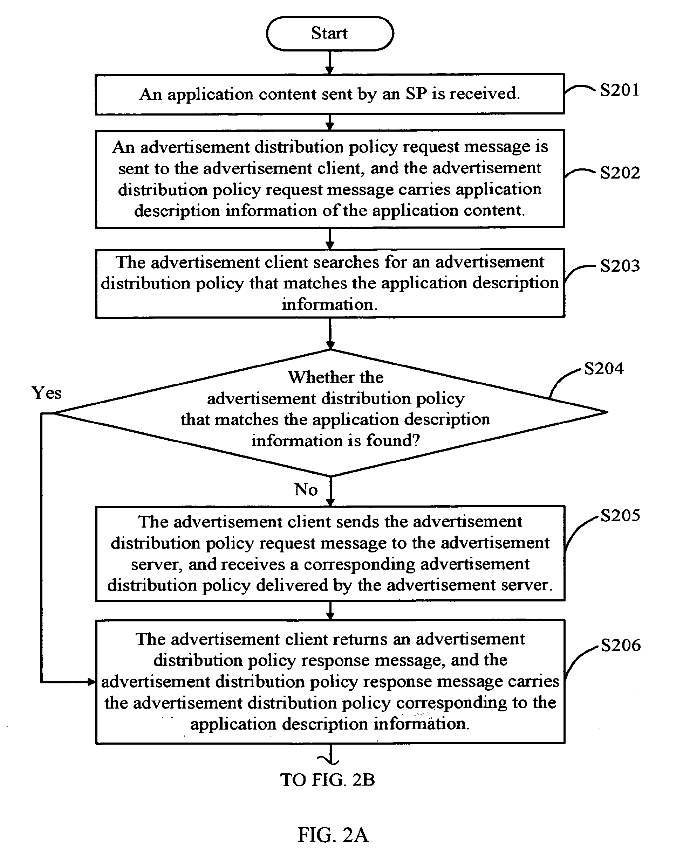

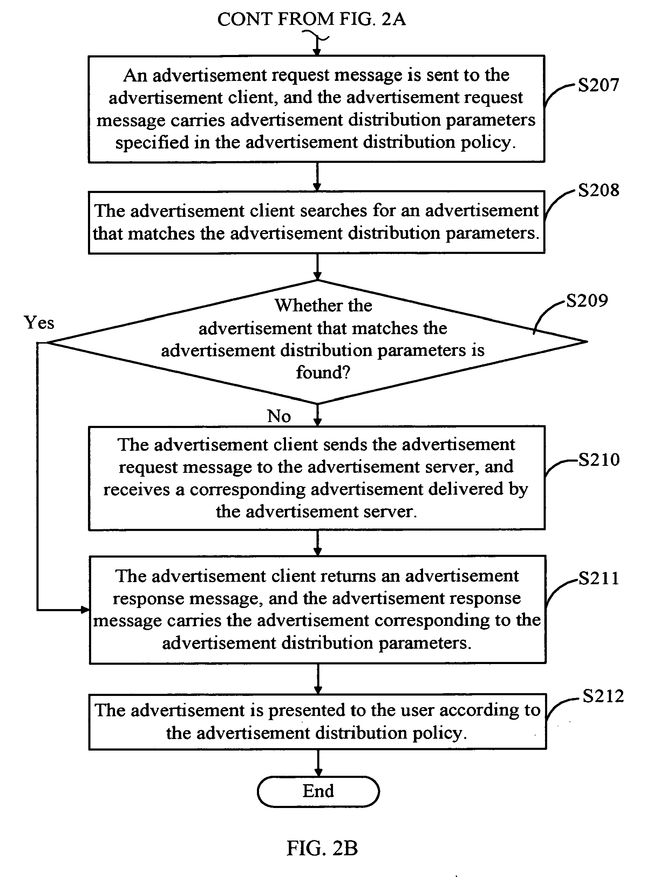

FIG. 2 is a flow chart of a method for presenting an advertisement according to a second embodiment of the present invention. Referring to FIG. 2, before the application content sent by the SP is received, a user corresponding to the advertisement client subscribes to an advertisement and an advertisement distribution policy from an advertisement server in advance, and the advertisement client receives an advertisement distribution policy and an advertisement delivered by the advertisement server in a preset time-triggered or event-triggered mode, and updates the advertisement and the advertisement distribution policy that are stored. The advertisement client receiving an advertisement distribution policy and an advertisement delivered by the advertisement server in a event-triggered mode refers to the following policy: For example, when the advertisement and the advertisement distribution policy subscribed by the user are updated in the advertisement server, the advertisement server delivers the advertisement and the advertisement distribution policy to the advertisement client, so as to enable the advertisement client to obtain the updated advertisement and advertisement distribution policy timely. Alternatively, when the number of advertisements in the advertisement client is lower than a certain value or is null, or certain advertisements are outdated, the advertisement client obtains the advertisement from the advertisement server. In this embodiment of the present invention, the method includes the following steps.

In step S201, an application content sent by an SP is received. The type of the application content includes video, web page, and game.

In step S202, an advertisement distribution policy request message is sent to the advertisement client. The advertisement distribution policy request message carries application description information of the application content. The application description information includes an ID, a type, and a theme of the application content, and an ID of the SP. The type of the application content includes web page, video, and game. The theme of the application content includes Entertainments, Politics, or Science and Technology. If the advertisement client does not have the advertisement distribution policy corresponding to the application description information, the advertisement client obtains the advertisement distribution policy corresponding to the application description information from an advertisement server.

In step S203, the advertisement client searches for an advertisement distribution policy that matches the application description information.

In step S204, the advertisement client determines whether the advertisement distribution policy that matches the application description information is found. If no advertisement distribution policy that matches the application description information is found, step S205 is performed; if the advertisement distribution policy that matches the application description information is found, step S206 and the subsequent steps are performed.

In step S205, the advertisement client sends the advertisement distribution policy request message to the advertisement server, receives an advertisement distribution policy delivered by the advertisement server, and stores the advertisement distribution policy. Then, step S206 and the subsequent steps are performed.

In step S206, the advertisement client returns an advertisement distribution policy response message. The advertisement distribution policy response message carries the advertisement distribution policy corresponding to the application description information. The advertisement distribution policy includes the application description information and description of corresponding advertisement distribution parameters. The advertisement distribution policy may be represented as follows by using the eXtensible Markup Language (XML):

```
    <?xml version="1.0" encoding="UTF-8"?>
    <xs:schema xmlns:xs="http://www.w3.org/2001/XMLSchema" element Form
    Default="qualified" attribute Form Default="unqualified">
        <xs:element name="Advertisement distribution policy">
        <xs:annotation>
        <xs:documentation>Comment describing your root element
    </xs:documentation>
             </xs:annotation>
            <xs:complexType>
            <xs:sequence>
                 <xs:element name="Application description information">
                 <xs:complexType>
                     <xs:choice maxOccurs="unbounded">
                     <xs:element name="SP ID"/>
                     <xs:element name="Application ID"/>
                     <xs:element name="Application type"/>
                     <xs:element name="Theme"/>
                     </xs:choice>
                 </xs: complexType>
                 </xs:element>
                 <xs:element name="Advertisement distribution parameters">
                 <xs:complexType>
                     <xs:sequence>
                     <xs:element name="Number of advertisements"/>
                              <xs:sequence maxOccurs="unbounded">
                         <xs:element name="Advertisement position"/>
                         <xs:element name="Advertisement form"/>
                         <xs:element name="Advertisement duration"/>
                         <xs:element name="Advertisement occasion"/>
                         <xs:element name="Advertisement size"/>
                     </xs:sequence>
                         </xs:sequence>
                     </xs:complexType>
                 </xs:element>
                     </xs:sequence>
                     <xs:attribute name="Policy No."/>
            </xs:complexType>
        </xs:element>
    </xs:schema>
```

The above advertisement distribution policy represented by using the XML document includes the application description information of the application content and advertisement distribution parameters. The advertisement distribution parameters include the number of advertisements, advertisement position, advertisement form, duration of each advertisement, distribution occasion of each advertisement, advertisement theme, and advertisement size etc. The advertisement position includes a center position on the top of a page and a right position on the top of a page etc. The advertisement form includes full row, floating icon, banner form, and in-text advertisement. Examples of the advertisement distribution policy are listed in Table 1.

**Table 1**

| | Application Description Information | | | | Advertisement Distribution Policy | | | | | |
|---|---|---|---|---|---|---|---|---|---|---|
| Policy No. | SP ID | Application ID | Application Type | Theme | Number of Advertisements | Advertisement Position | Advertisement Form | Advertisement Duration | Advertisement Occasion | Advertisement Size |
| 1 | SP001 | AP001 | Web Page | Science and Technology | 2 | Center position on the top of a page | Full Row | | Open the web page | 35 mm×8 mm |
| | | | | | | upper right corner of Keywords | In-text Advertisement | Duration for holding the mouse | Point to the keyword with the mouse | 35 mm×8 mm |
| 2 | SP001 | AP002 | Web Page | Entertainments | 3 | Center position on the bottom of a page | banner | | Open the web page | 25 mm×8 mm |
| 3 | SP002 | AP003 | Video | Politics | 2 | Bottom row | Text | 30s | 1/3 of the frame number | 10 mm×8 mm |
| | | | | | | Full screen | Video | 30s | 2/3 of the frame number | Full Screen |
| 4 | SP003 | AP004 | Game | Entertainments | 8 | Bottom row/Full screen | Text/Video/Picture | 45s | Mission complete point | 25 mm×8 mm /Full Screen |

In step S207, an advertisement request message is sent to the advertisement client. Once the advertisement occasion specified in the advertisement distribution policy occurs, the advertisement request message is sent to the advertisement client. The advertisement request message carries the advertisement distribution parameters specified in the advertisement distribution policy, and the advertisement distribution parameters include the number of advertisements, and form, theme, size, and file type of an advertisement.

In step S208, the advertisement client searches for an advertisement that matches the advertisement distribution parameters.

In step S209, the advertisement client determines whether the advertisement that matches the advertisement distribution parameters is found, and if no advertisement that matches the advertisement distribution parameters is found, step S210 is performed; if the advertisement that matches the advertisement distribution parameters is found, step S211 and the subsequent steps are performed.

In step S210, the advertisement client sends the advertisement request message to the advertisement server, receives an advertisement delivered by the advertisement server, and stores the advertisement. Then, step S211 and the subsequent steps are performed.

In step S211, the advertisement client returns an advertisement response message. The advertisement response message carries the advertisements corresponding to the advertisement distribution parameters. The description of the advertisement is listed in Table 2.

**Table 2**

| Advertisement No. | Advertisement Name | Theme | Form | File Type | Size | Duration |
|---|---|---|---|---|---|---|
| 001 | Mop Game | Science and Technology | Full Row | JPG | 35 mm×8 mm | |
| 002 | Dell Computer | Science and Technology | Full Row | Video | 25 mm×8 mm | 30s |
| 003 | English | Education | Bottom Row | Text | 30 mm×5 mm | |
| 004 | Sinopec | Society | In-text Advertisement | Video | 35 mm×8 mm | 45s |

Each of the above advertisements is represented by a segment of advertisement codes in the Hyper Text Markup Language (HTML) format. For example, the codes for the advertisement 001 in Table 2 are shown as follows:

```
    <iframe id="001" marginheight="0" marginwidth="0" frameborder="0"
    width="35"height="8"scrolling="NO"
    src="http://mopgg.mop.com/adshow.jsp?p=286">
        <noscript>
    <ahref="http://mopgg.mop.com/adclick.jsp?p=286">
    <imgsrc="http://mopgg.mop.com/adshow.jsp?p=286" width="35" height="8"
    border="0"> </a>
        </noscript>
    </iframe> //Advertisement codes
```

In step S212, the advertisement is presented to the user according to the advertisement distribution policy. For example, when the user opens and browses an entertainment web page with the SP ID as SP001 and the application ID as AP002 in Table 1, three advertisements with a size of 25 mm×8 mm are inserted at a center position on the bottom of a page in a banner form.

In this embodiment of the present invention, the application content and the advertisement presenting manner are separated. When different advertisement distributions are intended to be realized in the application content, only a plurality of advertisement distribution policies needs to be established, instead of changing the application content itself. Therefore, the advertisements can be presented flexibly and simply. In addition, as for the application content used off-line, flexible advertisement distribution modes can be selected by users according to different situations.

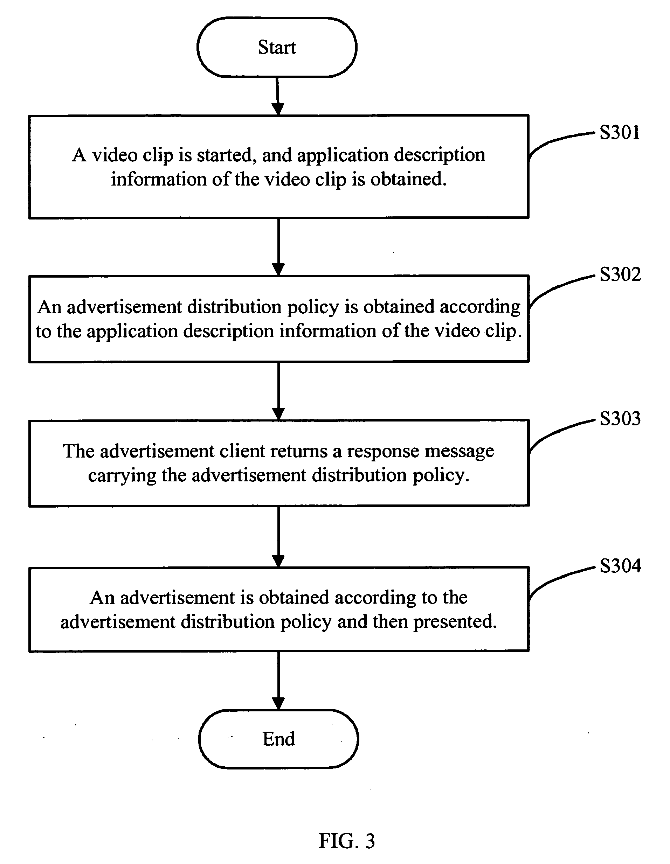

FIG. 3 is a flow chart of a method for presenting an advertisement according to a third embodiment of the present invention. Referring to FIG. 3, the method of this embodiment realizes inserting a video advertisement in a video service, which includes the following steps.

In step S301, a video clip is started, and application description information of the video clip is obtained. An application client starts a video clip provided by an SP, resolves the video clip, and obtains application description information of the video clip. The application description information of the video clip includes SP ID (SP002), Video ID (AP003), Video Type (Politics), and Frame Number (60).

In step S302, an advertisement distribution policy is obtained according to the application description information of the video clip. After the application description information is obtained, an advertisement distribution policy request carrying the application description information is sent to an advertisement client.

In step S303, the advertisement client returns a response message carrying the advertisement distribution policy. According to Table 1, the advertisement client acquires that the application description information satisfies the advertisement distribution policy 3: two advertisements in the following forms are inserted at the 20^{th} frame and the 40^{th} frame respectively, that is, a text advertisement is inserted at a bottom row of the video at the 20^{th} frame and lasts for 30s; and a video advertisement is inserted at the 40^{th} frame and lasts for 30s. In this case, the advertisement client returns a response message carrying the advertisement distribution policy 3. If the advertisement client does not have an advertisement corresponding to the application description information, the advertisement client obtains the advertisement from an advertisement server, and then sends the advertisement to the application client.

In step S304, an advertisement is obtained according to the advertisement distribution policy and then the advertisement is presented. During the playing of the video clip, when the 20^{th} frame is played, according to the context (that is, English learning) and the advertisement distribution parameters (Bottom row, Text Advertisement) in the advertisement distribution policy of Table 1 and Table 2, an advertisement with a sequence number of 003 is selected. After the advertisement with the sequence number of 003 is obtained, when the video is played, the text advertisement with the sequence number of 003 is presented at a bottom row of the video and lasts for 30s. Similarly, when the 40^{th} frame is played, according to the context (that is, news about electronic products) and the advertisement distribution parameters (Full Screen, Video Advertisement for 30s) in the advertisement distribution policy of Table 1 and Table 2, an advertisement with a sequence number of 002 is selected. After the advertisement with the sequence number of 002 is obtained, the playing of the video clip is paused, and the video advertisement is started. Once the playing of the advertisement is finished, the video clip resumes to be played.

In this embodiment of the present invention, the playing of the video clip and the advertisement presenting manner are separated. When different advertisement distributions are intended to be realized in the video clip, only a plurality of advertisement distribution policies needs to be established, instead of changing the playing of the video clip itself. Therefore, the advertisements can be presented flexibly and simply. In addition, as for the video clip used off-line, flexible advertisement distribution modes can be selected by users according to different situations.

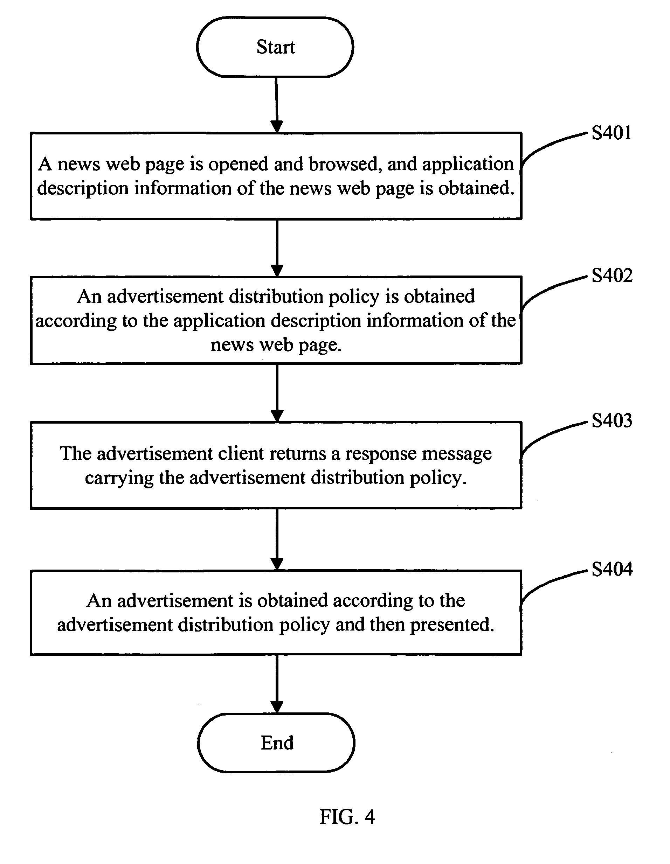

FIG. 4 is a flow chart of a method for presenting an advertisement according to a fourth embodiment of the present invention. Referring to FIG. 4, the method of this embodiment realizes inserting an advertisement into a web content provided by an SP/Content Provider (CP) without an advertisement/advertisement position, which includes the following steps.

In step S401, a news web page is opened and browsed, and application description information of the news web page is obtained. The application description information of the news web page may be represented by using the HTML:

```
   <HTML>
        <HEAD>
        <title>Proposal from CNDCA IT Team: Intercommunication and
        interoperation of Internet need to be regulated by
        legislation-DoNews.com</title>
        <meta name="theme" content="Science and Technology" />
    <meta name="keywords" content="Resources" />
    <meta name="Copyright" content="AP001, SP001" />
    </HEAD>
    <BODY>
    <p>The Telecom and the CNC are separated in the south and north geographic
    locations, which results in the separation of Internet access. Thereby, the
    domestic Internet applications cannot realize the intercommunication and
    interoperation, which further causes severe wastes of national and enterprise
    resources. </p><p>"How could the intercommunication and interoperation
    objects be realized, if merely two wood boards are used for connecting two
    highways?" said Liu Hanyuan, a member of the national committee of the CPPCC,
    to the reporter on March 12 by citing a vivid example</p><p>
    <BODY>
    </HTML>
```

When the user opens and browses the news web page, the following data is resolved: an application ID (AP001), an SP ID (SP001), an application theme (Science and Technology), and keywords (Resources) in the content of the news web page, and the parameters are the above resolved data.

In step S402, an advertisement distribution policy is obtained according to the application description information of the news web page. After the application description information is obtained, an advertisement distribution policy request carrying the application description information is sent to an advertisement client.

In step S403, the advertisement client returns a response message carrying the advertisement distribution policy. According to Table 1, the advertisement client acquires that the application description information satisfies the advertisement distribution policy 1: two advertisements are distributed in the text of the web page, that is, in a first advertisement position, a full row advertisement with a size of 35 mmx8 mm in a form of a picture is distributed at a center position on the top of the page; and in a second advertisement position, a video in-text advertisement with a size of 35 mm×8 mm is distributed. The full row advertisement is inserted at the center position on the top of the page, the video in-text advertisement is inserted at the keyword "Resources", and the advertisement position mark is shown as follows:

```
   <HTML>
   <HEAD>
   <title> Proposal from CNDCA IT Team: Intercommunication and interoperation of
   Internet need to be regulated by legislation-DoNews.com</title>
   <meta name="theme" content="Science and Technology" />
    <meta name="keywords" content="Telecom Resources" />
    <meta name="Copyright" content="AP001, SP001" />
   </HEAD>
    <BODY>
    <!--Ad Begin:-->
    If(webinit)request_Ad(ad_parameter);
    <!--Ad End-->
    <p>The Telecom and the CNC are separated in the south and north geographic
    locations, which results in the separation of Internet access. Thereby, the
    domestic Internet applications cannot realize the intercommunication and
    interoperation, which further causes severe wastes of national and enterprise
   resources.
    <!--Ad Begin:-->
    If(mouseOver)request_Ad(ad_parameter);
    <!--Ad End-->
    </p><p>"How could the intercommunication and interoperation objects be realized,
    if merely two wood boards are used for connecting two highways?" said Liu
    Hanyuan, a member of the national committee of the CPPCC, to the reporter on
    March 12 by citing a vivid example</p><p>
    <BODY>
    </HTML>
```

Accordingly, the advertisement client returns a response message carrying the advertisement distribution policy 1.

In step S404, an advertisement is obtained according to the advertisement distribution policy 1 and then the advertisement is presented.

When the user opens the news web page, according to the theme (Science and Technology) of the news web page and the advertisement distribution policy 1 (full row, picture, and 35 mmx8 mm), an advertisement with a sequence number of 001 is selected, and the advertisement with the sequence number of 001 is presented at the first advertisement position. When the user points to the keyword "Resources" with a mouse, according to the keywords (Telecom Resources) of the web page and the advertisement distribution policy 1 (in-text, video, and 35 mmx8 mm), an advertisement with a sequence number of 004 is selected, and the advertisement with the sequence number of 004 is presented at the second advertisement position.

In this embodiment of the present invention, the content of the web page and the advertisement presenting manner are separated. When different advertisement distributions are intended to be realized in the content of the web page, only a plurality of advertisement distribution policies needs to be established, instead of changing the content of the web page itself Therefore, the advertisements can be presented flexibly and simply.

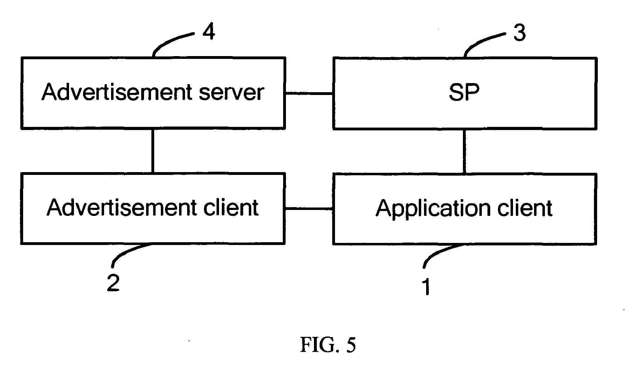

FIG. 5 is a schematic block diagram of a system for presenting an advertisement according to a fifth embodiment of the present invention. Referring to FIG. 5, the system includes: an application client 1 and an advertisement client 2.

The application client 1 is adapted to obtain an advertisement distribution policy and an advertisement from the advertisement client 2 according to an application content sent by an SP 3, and present the advertisement according to the advertisement distribution policy.

The advertisement client 2 is adapted to return the advertisement distribution policy and the advertisement to the application client 1 according to a request from the application client 1. If the advertisement distribution policy and the advertisement are not pre-stored in the advertisement client 2, the advertisement client 2 is adapted to obtain the advertisement distribution policy and the advertisement from an advertisement server 4.

The system for presenting an advertisement further includes the SP 3 and the advertisement server 4.

The SP 3 is adapted to provide the application content to the application client 1, negotiate with the advertisement server 4 to establish different advertisement distribution policies for different users or user groups and establish different advertisement distribution policies for the same user or user group in different application scenarios, and send the advertisement distribution policies to the advertisement server 4.

The advertisement server 4 is adapted to store various advertisements and the advertisement distribution policies sent by the SP 3, and deliver an advertisement distribution policy and an advertisement to the advertisement client 2 in a preset time-triggered or event-triggered mode. Alternatively, when receiving a policy request or an advertisement request from the advertisement client 2, the advertisement server 4 is adapted to deliver an advertisement distribution policy or an advertisement to the advertisement client 2 according to the policy request or the advertisement request.

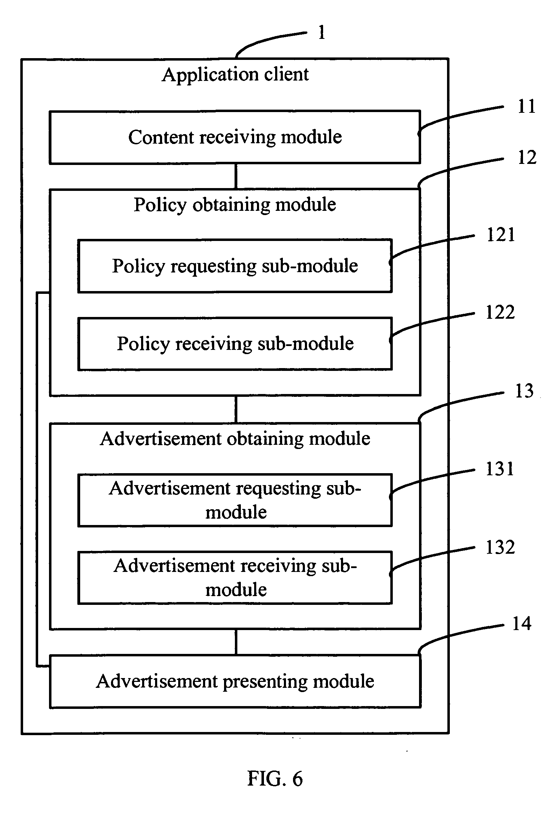

FIG. 6 is a schematic block diagram of an application client in the system for presenting an advertisement according to the fifth embodiment of the present invention. Referring to FIG. 6, the application client includes: a content receiving module 11, a policy obtaining module 12, an advertisement obtaining module 13, and an advertisement presenting module 14.

The content receiving module 11 is adapted to receive an application content sent by an SP 3. The policy obtaining module 12 is adapted to obtain an advertisement distribution policy corresponding to the application content received by the content receiving module 11. The advertisement obtaining module 13 is adapted to obtain an advertisement according to the advertisement distribution policy obtained by the policy obtaining module 12. The advertisement presenting module 14 is adapted to present the advertisement obtained by the advertisement obtaining module 13 according to the advertisement distribution policy obtained by the policy obtaining module 12.

The policy obtaining module 12 includes a policy requesting sub-module 121 and a policy receiving sub-module 122.

The policy requesting sub-module 121 is adapted to send an advertisement distribution policy request message to an advertisement client 2. The advertisement distribution policy request message carries application description information of the application content, and the application description information includes an ID, a type, and a theme of the application content, and an ID of the SP. The policy receiving sub-module 122 is adapted to receive an advertisement distribution policy response message returned by the advertisement client 2. The advertisement distribution policy response message carries an advertisement distribution policy corresponding to the application description information.

The advertisement obtaining module 13 includes an advertisement requesting sub-module 131 and an advertisement receiving sub-module 132.

The advertisement requesting sub-module 131 is adapted to send an advertisement request message to the advertisement client 2. The advertisement request message carries advertisement distribution parameters specified in the advertisement distribution policy. The advertisement receiving sub-module 132 is adapted to receive an advertisement response message returned by the advertisement client 2. The advertisement response message carries an advertisement satisfying the advertisement distribution parameters.

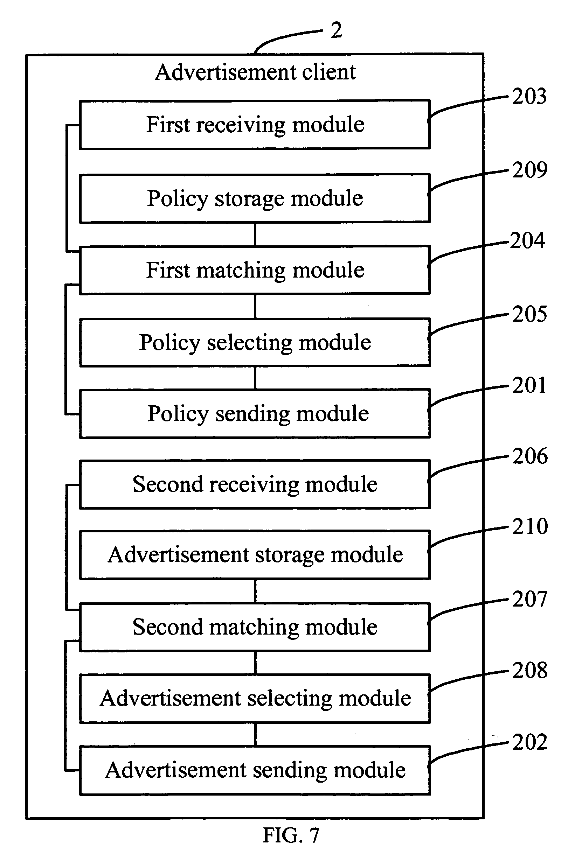

FIG. 7 is a schematic block diagram of an advertisement client in the system for presenting an advertisement according to the fifth embodiment of the present invention. Referring to FIG. 7, the advertisement client includes: a policy sending module 201 and an advertisement sending module 202.

The policy sending module 201 is adapted to return an advertisement distribution policy response message to an application client 1. The advertisement distribution policy response message carries an advertisement distribution policy corresponding to the application description information. The advertisement sending module 202 is adapted to return an advertisement response message to the application client 1. The advertisement response message carries an advertisement satisfying advertisement distribution parameters.

The advertisement client 2 further includes: a first receiving module 203, a first matching module 204, and a policy selecting module 205.

The first receiving module 203 is adapted to receive an advertisement distribution policy request message sent by the application client 1. The advertisement distribution policy request message carries application description information of an application content, and the application description information includes an ID, a type, and a theme of the application content, and an ID of an SP. The first matching module 204 is adapted to search for a matching advertisement distribution policy in a policy storage module 209 according to the application description information received by the first receiving module 203, and trigger the policy sending module 201 if the matching advertisement distribution policy is found; if no matching advertisement distribution policy is found, trigger the policy selecting module 205. The policy selecting module 205 is adapted to send the advertisement distribution policy request message received by the first receiving module 203 to an advertisement server 4, receive an advertisement distribution policy delivered by the advertisement server 4, and send the advertisement distribution policy to the policy sending module 201.

The advertisement client 2 further includes: a second receiving module 206, a second matching module 207, and an advertisement selecting module 208.

The second receiving module 206 is adapted to receive an advertisement request message sent by the application client 1. The advertisement request message carries advertisement distribution parameters specified in the advertisement distribution policy. The second matching module 207 is adapted to search for a matching advertisement in an advertisement storage module 210 according to the advertisement distribution parameters received by the second receiving module 206, and trigger the advertisement sending module 202 if the matching advertisement is found; if no matching advertisement is found, trigger the advertisement selecting module 208. The advertisement selecting module 208 is adapted to send the advertisement request message received by the second receiving module 206 to the advertisement server 4, receive an advertisement delivered by the advertisement server 4, and send the advertisement to the advertisement sending module 202.

The advertisement client 2 further includes: the policy storage module 209 and the advertisement storage module 210.

The policy storage module 209 is adapted to receive the advertisement distribution policy delivered by the advertisement server 4 in a preset time-triggered or event-triggered mode, and updates the advertisement distribution policy that is stored. The advertisement storage module 210 is adapted to receive the advertisement delivered by the advertisement server 4 in a preset time-triggered or event-triggered mode, and updates the advertisement that is stored.

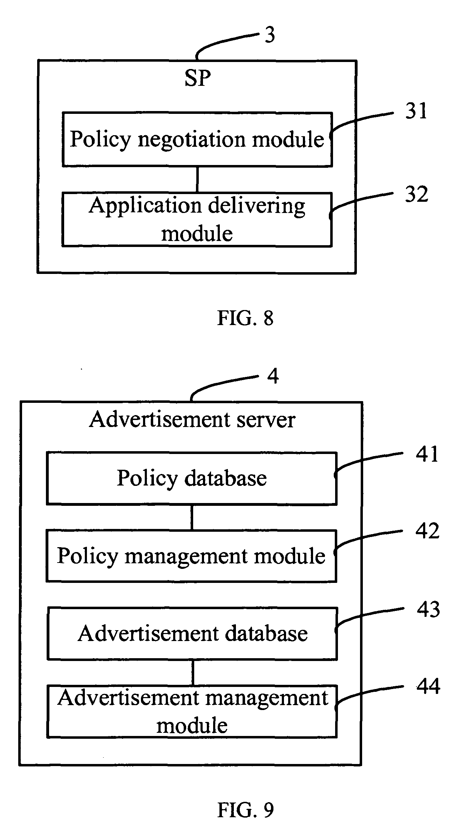

FIG. 8 is a schematic block diagram of an SP in the system for presenting an advertisement according to the fifth embodiment of the present invention. Referring to FIG. 8, the SP includes: a policy negotiation module 31 and an application delivering module 32.

The policy negotiation module 31 is adapted to negotiate with an advertisement server 4 to establish different advertisement distribution policies for different users or user groups and establish different advertisement distribution policies for the same user or user group in different application scenarios, and send the advertisement distribution policies to the advertisement server 4. The application delivering module 32 is adapted to provide an application content to an application client 1.

FIG. 9 is a schematic block diagram of an advertisement server in the system for presenting an advertisement according to the fifth embodiment of the present invention. Referring to FIG. 9, the advertisement server includes: a policy database 41, a policy management module 42, an advertisement database 43, and an advertisement management module 44.

The policy database 41 is adapted to store advertisement distribution policies sent by an SP 3. The policy management module 42 is adapted to read an advertisement distribution policy from the policy database 41 in a preset time-triggered or event-triggered mode, and deliver the advertisement distribution policy to an advertisement client 2. Alternatively, when receiving a policy request from the advertisement client 2, the policy management module 42 is adapted to read an advertisement distribution policy from the policy database 41 according to the policy request, and deliver the advertisement distribution policy to the advertisement client 2. The advertisement database 43 is adapted to store various advertisements and advertisement description information. The advertisement management module 44 is adapted to read an advertisement from the advertisement database 43 in a preset time-triggered or event-triggered mode, and deliver the advertisement to the advertisement client 2. Alternatively, when receiving an advertisement request from the advertisement client 2, the advertisement management module 44 is adapted to read an advertisement from the advertisement database 43 according to the advertisement request, and deliver the advertisement to the advertisement client 2.

In this embodiment of the present invention, the application content and the advertisement presenting manner are separated, and the SP 3 negotiates with the advertisement server 4 to establish flexible advertisement distribution policies. The application client 1 receives the application content sent by the SP 3, obtains the advertisement distribution policy corresponding to the application content from the advertisement client 2, obtains the advertisement from the advertisement client 2 according to the advertisement distribution policy, and presents the advertisement. When different advertisement distributions are intended to be realized in the application content, only a plurality of advertisement distribution policies needs to be established, instead of changing the application content itself Therefore, the advertisements can be presented flexibly and simply. In addition, as for an application content used off line by a user, flexible advertisement distribution modes can be selected by the user according to different situations.

It should be understood by persons skilled in the art that, modules in the device according to the embodiment may be distributed in the device of the embodiment according to the description of the embodiment, or be correspondingly changed to be disposed in one or more devices different from this embodiment. The modules of the above embodiment may be combined into one module, or further divided into a plurality of sub-modules.

The sequence numbers of the above embodiments of the present invention are merely for the convenience of description, and do not imply the preference among the embodiments.

Through the above description of the embodiments, it is apparent to persons skilled in the art that the present invention may be accomplished by hardware, and definitely may also be accomplished by software on a necessary universal hardware platform. Therefore, the technical solutions of the present invention may be embodied in the form of a software product. The software product may be stored in a nonvolatile storage medium (for example, CD-ROM, USB flash drive, or removable hard disk) and contain several instructions adapted to instruct computer equipment (for example, a personal computer, a server, or network equipment) to perform the method as described in the embodiments of the present invention.

## Claims

1. A method for presenting an advertisement, comprising:
receiving (S101) an application content sent by a service provider, SP;
obtaining (S102) an advertisement distribution policy corresponding to application description information of the application content, wherein the application description information comprises one or more information of the following: an identifier, ID, a type, and a theme of the application content, and an ID of the SP; and
obtaining (S103) an advertisement according to the advertisement distribution policy and presenting the advertisement.

2. The method for presenting an advertisement according to claim 1, wherein the advertisement distribution policy comprises different advertisement distribution policies established for different users or user groups and different advertisement distribution policies established for the same user or user group in different application scenarios.

3. The method for presenting an advertisement according to claim 1 or 2, wherein the obtaining (S102) the advertisement distribution policy corresponding to the application content further comprises:
sending (S202) an advertisement distribution policy request message to an advertisement client, wherein the advertisement distribution policy request message carries the application description information of the application content; and
receiving an advertisement distribution policy response message returned by the advertisement client, wherein the advertisement distribution policy response message carries the advertisement distribution policy corresponding to the application description information.

4. The method for presenting an advertisement according to claim 3, wherein after sending the advertisement distribution policy request message to the advertisement client, the method further comprises:
searching (S203) for, by the advertisement client, the advertisement distribution policy that matches the application description information; and
returning (S205), by the advertisement client, the advertisement distribution policy response message, if (S204) the advertisement distribution policy that matches the application description information is found;
reporting, by the advertisement client, the advertisement distribution policy request message to an advertisement server, and returning (S206) the advertisement distribution policy response message after receiving the advertisement distribution policy delivered by the advertisement server, and storing the advertisement distribution policy, if (S209) the advertisement distribution policy that matches with the application description information is not found.

5. The method for presenting an advertisement according to any of claim 1~4, wherein the obtaining the advertisement according to the advertisement distribution policy and presenting the advertisement further comprises:
sending (S207) an advertisement request message to an advertisement client when an advertisement occasion specified in the advertisement distribution policy occurs, wherein the advertisement request message carries advertisement distribution parameters specified in the advertisement distribution policy, and the advertisement distribution parameters comprise the number of advertisements, and form, theme, size, and file type of an advertisement;
receiving (S211) an advertisement response message returned by the advertisement client, wherein the advertisement response message carries an advertisement satisfying the advertisement distribution parameters; and
presenting (S212) the advertisement to a user according to the advertisement distribution policy.

6. The method for presenting an advertisement according to claim 5, wherein after sending the advertisement request message to the advertisement client, the method further comprises:
searching (S208) for, by the advertisement client, the advertisement that matches the advertisement distribution parameters; and
returning, by the advertisement client, the advertisement response message, if (S209) the advertisement that matches the advertisement distribution parameters is found;
sending (S210), by the advertisement client, the advertisement request message to an advertisement server, and returning the advertisement response message after receiving the advertisement delivered by the advertisement server, and storing the advertisement, if (S209) no advertisement that matches the advertisement distribution parameters is found.

7. The method for presenting an advertisement according to any of claim 1~6, further comprising:
receiving (S210), by an advertisement client, an advertisement and an advertisement distribution policy delivered by an advertisement server in a preset time-triggered or event-triggered mode, and updating the advertisement and the advertisement distribution policy that are stored.

8. An application client (1), comprising: a content receiving module (11), a policy obtaining module (12), an advertisement obtaining module (13), and an advertisement presenting module (14), wherein
the content receiving module (11) is adapted to receive an application content sent by a service provider, SP;
the policy obtaining module (12) is adapted to obtain an advertisement distribution policy corresponding to application description information of the application content received by the content receiving module, wherein the application description information comprises one or more information of the following: an identifier, ID, a type, and a theme of the application content, and an ID of the SP;
the advertisement obtaining module (13) is adapted to obtain an advertisement according to the advertisement distribution policy obtained by the policy obtaining module; and
the advertisement presenting module (14) is adapted to present the advertisement obtained by the advertisement obtaining module according to the advertisement distribution policy obtained by the policy obtaining module.

9. An advertisement client (2), comprising: a policy sending module (201) and an advertisement sending module (202), wherein
the policy sending module (201) is adapted to return an advertisement distribution policy response message to an application client, and the advertisement distribution policy response message carries an advertisement distribution policy corresponding to application description information, wherein the application description information comprises one or more information of the following: an identifier, ID, a type, and a theme of an application content, and an ID of the SP; and
the advertisement sending module (202) is adapted to return an advertisement response message to the application client, and the advertisement response message carries an advertisement satisfying advertisement distribution parameters specified in the advertisement distribution policy.

10. The advertisement client (2) according to claim 9, further comprising: a first receiving module (203), a first matching module (204), and a policy selecting module (205), wherein
the first receiving module (203) is adapted to receive an advertisement distribution policy request message sent by the application client, the advertisement distribution policy request message carries the application description information of the application content;
the first matching module (204) is adapted to search for a matching advertisement distribution policy in a policy storage module according to the application description information received by the first receiving module (203), and trigger the policy sending module (201) if the matching advertisement distribution policy is found ; trigger the policy selecting module (205) if no matching advertisement distribution policy is found; and
the policy selecting module (205) is adapted to send the advertisement distribution policy request message received by the first receiving module (203) to an advertisement server, receive an advertisement distribution policy delivered by the advertisement server, and send the advertisement distribution policy to the policy sending module (201).

11. The advertisement client according to any of claim 9~10, further comprising: a second receiving module (206), a second matching module (207), and an advertisement selecting module (208), wherein
the second receiving module (206) is adapted to receive an advertisement request message sent by the application client, and the advertisement request message carries advertisement distribution parameters specified in the advertisement distribution policy;
the second matching module (207) is adapted to search for a matching advertisement in an advertisement storage module according to the advertisement distribution parameters received by the second receiving module, and trigger the advertisement sending module if the matching advertisement is found; trigger the advertisement selecting module, if no matching advertisement is found; and
the advertisement selecting module (208) is adapted to send the advertisement request message received by the second receiving module to an advertisement server, receive an advertisement delivered by the advertisement server, and send the advertisement to the advertisement sending module.

12. The advertisement client according to any of claim 9~11, further comprising: a policy storage module (209) and an advertisement storage module (210), wherein
the policy storage module (209) is adapted to receive an advertisement distribution policy delivered by an advertisement server in a preset time-triggered or event-triggered mode, and updates the advertisement distribution policy that is stored; and
the advertisement storage module (210) is adapted to receive an advertisement delivered by the advertisement server in a preset time-triggered or event-triggered mode, and updating the advertisement that is stored.

13. A system for presenting an advertisement, comprising: an application client according to claim 8 and an advertisement client according to any of claims 9~12.

14. The system according to claim 13, further comprising: an advertisement server, the advertisement server (4) comprising: a policy management module (42), an advertisement database (43), and an advertisement management module (44), wherein
the policy management module (42) is adapted to read an advertisement distribution policy from a policy database in a preset time-triggered or event-triggered mode, and deliver the advertisement distribution policy to an advertisement client; or when receiving a policy request from the advertisement client, the policy management module is adapted to read an advertisement distribution policy from the policy database according to the policy request, and deliver the advertisement distribution policy to the advertisement client;
the advertisement database (43) is adapted to store various advertisements; and
the advertisement management module (44) is adapted to read an advertisement from the advertisement database in a preset time-triggered or event-triggered mode, and deliver the advertisement to the advertisement client; or when receiving an advertisement request from the advertisement client, the advertisement management module is adapted to read an advertisement from the advertisement database according to the advertisement request, and deliver the advertisement to the advertisement client.

15. The system according to any of claim 13~14, the advertisement server further comprising:
the policy database (41), adapted to store advertisement distribution policies sent by a service provider ,SP.

16. The system according to any of claim 13~15, further comprising: a service provider ,SP, (3) the SP further comprising: a policy negotiation module (31) and an application delivering module (32), wherein
the policy negotiation module (31) is adapted to negotiate with an advertisement server to establish different advertisement distribution policies for different users or user groups and establish different advertisement distribution policies for the same user or user group in different application scenarios, and send the advertisement distribution policies to the advertisement server; and
the application delivering module (32) is adapted to provide an application content to an application client.

## Patentansprüche

1. Verfahren zum Präsentieren einer Werbung, umfassend:
Empfangen (S101) eines durch einen Dienstanbieter SP gesendeten Anwendungsinhalts;
Erhalten (S 102) einer Werbungsverteilungsrichtlinie, die Anwendungsbeschreibungsinformationen des Anwendungsinhalts entspricht, wobei die Anwendungsbeschreibungsinformationen eine oder mehrere Informationen der Folgenden umfassen: eine Kennung ID, einen Typ und eine Gestaltung des Anwendungsinhalts und eine ID des SP; und
Erhalten (S103) einer Werbung gemäß der Werbungsverteilungsrichtlinie und Präsentieren der Werbung.

2. Verfahren zum Präsentieren einer Werbung nach Anspruch 1, wobei die Werbungsverteilungsrichtlinie verschiedene Werbungsverteilungsrichtlinien, die für verschiedene Benutzer oder Benutzergruppen festgelegt werden, und verschiedene Werbungsverteilungsrichtlinien, die für denselben Benutzer oder dieselbe Benutzergruppe in verschiedenen Anwendungsszenarien festgelegt werden, umfasst.

3. Verfahren zum Präsentieren einer Werbung nach Anspruch 1 oder 2, wobei das Erhalten (S 102) der Werbungsverteilungsrichtlinie, die dem Anwendungsinhalt entspricht, ferner Folgendes umfasst:
Senden (S202) einer Werbungsverteilungsrichtlinien-Anforderungsnachricht zu einem Werbungs-Client, wobei die Werbungsverteilungsrichtlinien-Anforderungsnachricht die Anwendungsbeschreibungsinformationen des Anwendungsinhalts führt; und
Empfangen einer durch den Werbungs-Client zurückgegebenen Werbungsverteilungsrichtlinien-Antwortnachricht, wobei die Werbungsverteilungsrichtlinien-Antwortnachricht die Werbungsverteilungsrichtlinie führt, die den Anwendungsbeschreibungsinformationen entspricht.

4. Verfahren zum Präsentieren einer Werbung nach Anspruch 3, wobei das Verfahren nach dem Senden der Werbungsverteilungsrichtlinien-Anforderungsnachricht zu dem Werbungs-Client ferner Folgendes umfasst:
Suchen (S203) nach der Werbungsverteilungsrichtlinie, die mit den Anwendungsbeschreibungsinformationen übereinstimmt, durch den Werbungs-Client; und
Zurückgeben (S205) der Werbungsverteilungsrichtlinien-Antwortnachricht durch den Werbungs-Client, wenn (S204) die Werbungsverteilungsrichtlinie, die mit den Anwendungsbeschreibungsinformationen übereinstimmt, gefunden wird;
Melden der Werbungsverteilungsrichtlinien-Anforderungsnachricht durch den Werbungs-Client an einen Werbungs-Server und Zurückgeben (S206) der Werbungsverteilungsrichtlinien-Antwortnachricht nach dem Empfang der durch den Werbungs-Server abgelieferten Werbungsverteilungsrichtlinie und Speichern der Werbungsverteilungsrichtlinie, wenn (S209) die Werbungsverteilungsrichtlinie, die mit den Anwendungsbeschreibungsinformationen übereinstimmt, nicht gefunden wird.

5. Verfahren zum Präsentieren einer Werbung nach einem der Ansprüche 1-4, wobei das Erhalten der Werbung gemäß der Werbungsverteilungsrichtlinie und das Präsentieren der Werbung ferner Folgendes umfasst:
Senden (S207) einer Werbungsanforderungsnachricht zu einem Werbungs-Client, wenn eine in der Werbungsverteilungsrichtlinie spezifizierte Werbegelegenheit eintritt, wobei die Werbungsanforderungsnachricht in der Werbungsverteilungsrichtlinie spezifizierte Werbungsverteilungsparameter führt und die Werbungsverteilungsparameter die Anzahl der Werbungen und Form, Gestaltung, Größe und Dateityp einer Werbung umfassen;
Empfangen (S211) einer durch den Werbungs-Client zurückgegebenen Werbungsantwortnachricht, wobei die Werbungsantwortnachricht eine Werbung führt, die den Werbungsverteilungsparametern genügt; und
Präsentieren (S212) der Werbung für einen Benutzer gemäß der Werbungsverteilungsrichtlinie.

6. Verfahren zum Präsentieren einer Werbung nach Anspruch 5, wobei das Verfahren nach dem Senden der Werbungsanforderungsnachricht zu dem Werbungs-Client ferner Folgendes umfasst:
Suchen (S208) nach der Werbung, die mit den Werbungsverteilungsparametern übereinstimmt, durch den Werbungs-Client; und
Zurückgeben der Werbungsantwortnachricht durch den Werbungs-Client, wenn (S209) die Werbung, die mit den Werbungsverteilungsparametern übereinstimmt, gefunden wird;
Senden (S210) der Werbungsanforderungsnachricht durch den Werbungs-Client zu einem Werbungs-Server und Zurückgeben der Werbungsantwortnachricht nach dem Empfang der durch den Werbungs-Server abgelieferten Werbung und Speichern der Werbung, wenn (S209) keine Werbung gefunden wird, die mit den Werbungsverteilungsparametern übereinstimmt.

7. Verfahren zum Präsentieren einer Werbung nach einem der Ansprüche 1-6, ferner umfassend:
Empfangen (S210) einer Werbung und einer Werbungsverteilungsrichtlinie, die durch einen Werbungs-Server in einem voreingestellten zeitgetriggerten oder ereignisgetriggerten Modus durch einen Werbungs-Client abgeliefert wird, und Aktualisieren der Werbung und der Werbungsverteilungsrichtlinie, die gespeichert sind.

8. Anwendungs-Client (1), umfassend: ein Inhaltsempfangsmodul (11), ein Richtlinienerhaltemodul (12), ein Werbungserhaltemodul (13) und ein Werbungspräsentationsmodul (14), wobei
das Inhaltsempfangsmodul (11) dafür ausgelegt ist, einen durch einen Dienstanbieter SP gesendeten Anwendungsinhalt zu empfangen;
das Richtlinienerhaltemodul (12) dafür ausgelegt ist, eine Werbungsverteilungsrichtlinie zu erhalten, die Anwendungsbeschreibungsinformationen des durch das Inhaltsempfangsmodul empfangenen Anwendungsinhalts entspricht, wobei die Anwendungsbeschreibungsinformationen eine oder mehrere Informationen der Folgenden umfassen: eine Kennung ID, einen Typ und eine Gestaltung des Anwendungsinhalts und eine ID des SP;
das Werbungserhaltemodul (13) dafür ausgelegt ist, eine Werbung gemäß der durch das Richtlinienerhaltemodul erhaltenen Werbungsverteilungsrichtlinie zu erhalten; und
das Werbungspräsentationsmodul (14) dafür ausgelegt ist, die durch das Werbungserhaltemodul erhaltene Werbung gemäß der durch das Richtlinienerhaltemodul erhaltenen Werbungsverteilungsrichtlinie zu präsentieren.

9. Werbungs-Client (2), umfassend:
ein Richtliniensendemodul (201) und ein Werbungssendemodul (202), wobei das Richtliniensendemodul (201) dafür ausgelegt ist, eine Werbungsverteilungsrichtlinien-Antwortnachricht an einen Anwendungs-Client zurückzugeben, und die Werbungsverteilungsrichtlinien-Antwortnachricht eine Werbungsverteilungsrichtlinie führt, die Anwendungsbeschreibungsinformationen entspricht, wobei die Anwendungsbeschreibungsinformationen eine oder mehrere Informationen der Folgenden umfassen: eine Kennung ID, einen Typ und eine Gestaltung eines Anwendungsinhalts und eine ID des SP; und
das Werbungssendemodul (202) dafür ausgelegt ist, eine Werbungsantwortnachricht an den Anwendungs-Client zurückzugeben, und die Werbungsantwortnachricht eine Werbung führt, die in der Werbungsverteilungsrichtlinie spezifizierten Werbungsverteilungsparametern genügt.

10. Werbungs-Client (2) nach Anspruch 9, ferner umfassend: ein erstes Empfangsmodul (203), ein erstes Übereinstimmungsfindungsmodul (204) und ein Richtlinienauswahlmodul (205), wobei
das erste Empfangsmodul (203) dafür ausgelegt ist, eine durch den Anwendungs-Client gesendete Werbungsverteilungsrichtlinien-Anforderungsnachricht zu empfangen, wobei die Werbungsverteilungsrichtlinien-Anforderungsnachricht die Anwendungsbeschreibungsinformationen des Anwendungsinhalts führt;
das erste Übereinstimmungsfindungsmodul (204) dafür ausgelegt ist, in einem Richtlinienspeichermodul gemäß den durch das erste Empfangsmodul (203) empfangenen Anwendungsbeschreibungsinformationen nach einer übereinstimmenden Werbungsverteilungsrichtlinie zu suchen und das Richtliniensendemodul (201) zu triggern, wenn die übereinstimmende Werbungsverteilungsrichtlinie gefunden wird; und das Richtlinienauswahlmodul (205) zu triggern, wenn keine übereinstimmende Werbungsverteilungsrichtlinie gefunden wird; und
das Richtlinienauswahlmodul (205) dafür ausgelegt ist, die durch das erste Empfangsmodul (203) empfangene Werbungsverteilungsrichtlinien-Anforderungsnachricht zu einem Werbungs-Server zu senden, eine durch den Werbungs-Server abgelieferte Werbungsverteilungsrichtlinie zu empfangen und die Werbungsverteilungsrichtlinie zu dem Richtliniensendemodul (201) zu senden.

11. Werbungs-Client nach einem der Ansprüche 9-10, ferner umfassend: ein zweites Empfangsmodul (206), ein zweites Übereinstimmungsfindungsmodul (207) und ein Werbungsauswahlmodul (208), wobei
das zweite Empfangsmodul (206) dafür ausgelegt ist, eine durch den Anwendungs-Client gesendete Werbungsanforderungsnachricht zu empfangen, und die Werbungsanforderungsnachricht in der Werbungsverteilungsrichtlinie spezifizierte Werbungsverteilungsparameter führt;
das zweite Übereinstimmungsfindungsmodul (207) dafür ausgelegt ist, in einem Werbungs-Speichermodul gemäß den durch das zweite Empfangsmodul empfangenen Werbungsverteilungsparametern nach einer übereinstimmenden Werbung zu suchen und das Werbungssendemodul zu triggern, wenn die übereinstimmende Werbung gefunden wird; und das Werbungsauswahlmodul zu triggern, wenn keine übereinstimmende Werbung gefunden wird; und
das Werbungsauswahlmodul (208) dafür ausgelegt ist, die durch das zweite Empfangsmodul empfangene Werbungsanforderungsnachricht zu einem Werbungs-Server zu senden, eine durch den Werbungs-Server abgelieferte Werbung zu empfangen und die Werbung zu dem Werbungssendemodul zu senden.

12. Werbungs-Client nach einem der Ansprüche 9-11, ferner umfassend: ein Richtlinienspeichermodul (209) und ein Werbungsspeichermodul (210), wobei das Richtlinienspeichermodul (209) dafür ausgelegt ist, eine Werbungsverteilungsrichtlinie zu empfangen, die durch einen Werbungs-Server in einem voreingestellten zeitgetriggerten oder ereignisgetriggerten Modus abgeliefert wird, und die Werbungsverteilungsrichtlinie, die gespeichert ist, zu aktualisieren; und das Werbungsspeichermodul (210) dafür ausgelegt ist, eine Werbung zu empfangen, die durch den Werbungs-Server in einem voreingestellten zeitgetriggerten oder ereignisgetriggerten Modus abgeliefert wird, und die Werbung, die gespeichert ist, zu aktualisieren.

13. System zum Präsentieren einer Werbung, umfassend: einen Anwendungs-Client nach Anspruch 8 und einen Werbungs-Client nach einem der Ansprüche 9-12.

14. System nach Anspruch 13, ferner umfassend: einen Werbungs-Server, wobei der Werbungs-Server (4) Folgendes umfasst: ein Richtlinienverwaltungsmodul (42), eine Werbungs-Datenbank (43) und ein Werbungsverwaltungsmodul (44), wobei das Richtlinienverwaltungsmodul (42) dafür ausgelegt ist, eine Werbungsverteilungsrichtlinie aus einer Richtliniendatenbank in einem voreingestellten zeitgetriggerten oder ereignisgetriggerten Modus zu lesen und die Werbungsverteilungsrichtlinie an einen Werbungs-Client abzuliefern; oder beim Empfang einer Richtlinienanforderung von dem Werbungs-Client das Richtlinienverwaltungsmodul dafür ausgelegt ist, eine Werbungsverteilungsrichtlinie aus der Richtliniendatenbank gemäß der Richtlinienanforderung zu lesen und die Werbungsverteilungsrichtlinie an den Werbungs-Client abzuliefern;
die Werbungs-Datenbank (43) dafür ausgelegt ist, verschiedene Werbungen zu speichern; und
das Werbungsverwaltungsmodul (44) dafür ausgelegt ist, eine Werbung aus der Werbungs-Datenbank in einem voreingestellten zeitgetriggerten oder ereignisgetriggerten Modus zu lesen und die Werbung an den Werbungs-Client abzuliefern; oder beim Empfang einer Werbungsanforderung von dem Werbungs-Client das Werbungsverwaltungsmodul dafür ausgelegt ist, eine Werbung aus der Werbungs-Datenbank gemäß der Werbungsanforderung zu lesen und die Werbung an den Werbungs-Client abzuliefern.

15. System nach einem der Ansprüche 13-14, wobei der Werbungs-Server ferner Folgendes umfasst:
die Richtliniendatenbank (41), die dafür ausgelegt ist, durch einen Dienstanbieter SP gesendete Werbungsverteilungsrichtlinien zu speichern.

16. System nach einem der Ansprüche 13-15, ferner umfassend: einen Dienstanbieter SP (3), wobei der SP ferner Folgendes umfasst: ein Richtlinienaushandlungsmodul (31) und ein Anwendungsabliefermodul (32), wobei
das Richtlinienaushandlungsmodul (31) dafür ausgelegt ist, mit einem Werbungs-Server zu verhandeln, um verschiedene Werbungsverteilungsrichtlinien für verschiedene Benutzer oder Benutzergruppen festzulegen und verschiedene Werbungsverteilungsrichtlinien für denselben Benutzer oder dieselbe Benutzergruppe in verschiedenen Anwendungsszenarien festzulegen und die Werbungsverteilungsrichtlinien zu dem Werbungs-Server zu senden; und
das Anwendungsabliefermodul (32) dafür ausgelegt ist, einen Anwendungsinhalt einem Anwendungs-Client zuzuführen.

## Revendications

1. Procédé de présentation d'une publicité, comprenant :
la réception (S101) d'un contenu d'application envoyé par un fournisseur de services, SP;
l'obtention (S 102) d'une politique de distribution de publicité correspondant à des informations de description d'application du contenu d'application, les informations de description d'application comprenant une ou plusieurs informations parmi : un identifiant, ID, un type et un thème du contenu d'application, et un ID du SP ; et
l'obtention (S103) d'une publicité en fonction de la politique de distribution de publicité et la présentation de la publicité.

2. Procédé de présentation d'une publicité selon la revendication 1, dans lequel la politique de distribution de publicité comprend différentes politiques de distribution de publicité établies pour différents utilisateurs ou groupes d'utilisateurs et différentes politiques de distribution de publicité établies pour le même utilisateur ou groupe d'utilisateurs dans différents scénarios d'application.

3. Procédé de présentation d'une publicité selon la revendication 1 ou 2, dans lequel l'obtention (S 102) de la politique de distribution de publicité correspondant au contenu d'application comprend en outre :
l'envoi (S202) d'un message de requête de politique de distribution de publicité à un client de publicité, le message de requête de politique de distribution de publicité incluant les informations de description d'application du contenu d'application ; et
la réception d'un message de réponse de politique de distribution de publicité renvoyé par le client de publicité, le message de réponse de politique de distribution de publicité incluant la politique de distribution de publicité correspondant aux informations de description d'application.

4. Procédé de présentation d'une publicité selon la revendication 3, comprenant en outre, après l'envoi du message de requête de politique de distribution de publicité au client de publicité :
la recherche (S203), par le client de publicité, de la politique de distribution de publicité qui correspond aux informations de description d'application ; et
le renvoi (S205), par le client de publicité, du message de réponse de politique de distribution de publicité, si (S204) la politique de distribution de publicité qui correspond aux informations de description d'application est trouvée ;
la communication, par le client de publicité, du message de réponse de politique de distribution de publicité à un serveur de publicité, et le renvoi (S206) du message de réponse de politique de distribution de publicité après la réception de la politique de distribution de publicité délivrée par le serveur de publicité, et la mémorisation de la politique de distribution de publicité, si (S209) la politique de distribution de publicité qui correspond aux informations de description d'application n'est pas trouvée.

5. Procédé de présentation d'une publicité selon l'une quelconque des revendications 1 à 4, dans lequel l'obtention de la publicité en fonction de la politique de distribution de publicité et la présentation de la publicité comprennent en outre :
l'envoi (S207) d'un message de requête de publicité à un client de publicité quand une occasion de publicité spécifiée dans la politique de distribution de publicité se produit, le message de requête de publicité incluant des paramètres de distribution de publicité spécifiés dans la politique de distribution de publicité, et les paramètres de distribution de publicité comprenant le nombre de publicités, et la forme, le thème, la taille et le type de fichier d'une publicité ;
la réception (S211) d'un message de réponse de publicité renvoyé par le client de publicité, le message de réponse de publicité incluant une publicité satisfaisant les paramètres de distribution de publicité ; et
la présentation (S212) de la publicité à un utilisateur en fonction de la politique de distribution de publicité.

6. Procédé de présentation d'une publicité selon la revendication 5, comprenant en outre, après l'envoi du message de requête de publicité au client de publicité :
la recherche (S208), par le client de publicité, de la publicité qui correspond aux paramètres de distribution de publicité ; et
le renvoi, par le client de publicité, du message de réponse de publicité, si (S209) la publicité qui correspond aux paramètres de distribution de publicité est trouvée ;
l'envoi (S210), par le client de publicité, du message de requête de publicité à un serveur de publicité, et le renvoi du message de réponse de publicité après la réception de la publicité délivrée par le serveur de publicité, et la mémorisation de la publicité, si (S209) aucune publicité correspondant aux paramètres de distribution de publicité n'est trouvée.

7. Procédé de présentation d'une publicité selon l'une quelconque des revendications 1 à 6, comprenant en outre :
la réception (S210), par un client de publicité, d'une publicité et d'une politique de distribution de publicité délivrées par un serveur de publicité dans un mode préétabli de déclenchement par le temps et de déclenchement par un événement, et l'actualisation de la publicité et de la politique de distribution de publicité mémorisées.

8. Client d'application (1), comprenant un module de réception de contenu (11), un module d'obtention de politique (12), un module d'obtention de publicité (13), et un module de présentation de publicité (14), dans lequel
le module de réception de contenu (11) est adapté pour recevoir un contenu d'application envoyé par un fournisseur de services, SP ;
le module d'obtention de politique (12) est adapté pour obtenir une politique de distribution de publicité correspondant à des informations de description d'application du contenu d'application reçu par le module de réception de contenu, les informations de description d'application comprenant une ou plusieurs informations parmi : un identifiant, ID, un type et un thème du contenu d'application, et un ID du SP ;
le module d'obtention de publicité (13) est adapté pour obtenir une publicité en fonction de la politique de distribution de publicité obtenu par le module d'obtention de politique ; et
le module de présentation de publicité (14) est adapté pour présenter la publicité obtenue par le module d'obtention de publicité en fonction de la politique de distribution de publicité obtenue par le module d'obtention de politique.

9. Client de publicité (2), comprenant : un module d'envoi de politique (201) et un module d'envoi de publicité (202), dans lequel
le module d'envoi de politique (201) est adapté pour renvoyer un message de réponse de politique de distribution de publicité à un client d'application, et le message de réponse de politique de distribution de publicité inclut une politique de distribution de publicité correspondant à des informations de description d'application, dans lequel les informations de description d'application comprennent une ou plusieurs informations parmi : un identifiant, ID, un type et un thème d'un contenu d'application, et un ID du SP ; et
le module d'envoi de publicité (202) est adapté pour renvoyer un message de réponse de publicité au client d'application, et le message de réponse de publicité inclut une publicité satisfaisant des paramètres de distribution de publicité spécifiés dans la politique de distribution de publicité.

10. Client de publicité (2) selon la revendication 9, comprenant en outre : un premier module de réception (203), un premier module de mise en correspondance (204) et un module de sélection de politique (205), dans lequel
le premier module de réception (203) est adapté pour recevoir un message de requête de politique de distribution de publicité envoyé par le client d'application, le message de requête de politique de distribution de publicité incluant les informations de description d'application du contenu d'application ;
le premier module de mise en correspondance (204) est adapté pour rechercher une politique de distribution de publicité correspondante dans un module de mémorisation de politique en fonction des informations de description d'application reçues par le premier module de réception (203), et déclencher le module d'envoi de politique (201) si la politique de distribution de publicité correspondante est trouvée ; déclencher le module de sélection de politique (205) si aucune politique de distribution de publicité n'est trouvée ; et
le module de sélection de politique (205) est adapté pour envoyer le message de requête de politique de distribution de publicité reçu par le premier module de réception (203) à un serveur de publicité, recevoir une politique de distribution de publicité délivrée par le serveur de publicité, et envoyer la politique de distribution de publicité au module d'envoi de politique (201).

11. Client de publicité selon l'une quelconque des revendications 9 et 10, comprenant en outre : un second module de réception (206), un second module de mise en correspondance (207), et un module de sélection de publicité (208), dans lequel le second module de réception (206) est adapté pour recevoir un message de requête de publicité envoyé par le client d'application, le message de requête de publicité incluant des paramètres de distribution de publicité spécifiés dans la politique de distribution de publicité ;
le second module de mise en correspondance (207) est adapté pour rechercher une publicité correspondante dans un module de mémorisation de publicité en fonction des paramètres de distribution de publicité reçus par le second module de réception, et déclencher le module d'envoi de publicité si la publicité correspondante est trouvée ; déclencher le module de sélection de politique, si aucune publicité correspondante n'est trouvée ; et
le module de sélection de publicité (208) est adapté pour envoyer le message de requête de publicité reçu par le second module de réception à un serveur de publicité, recevoir une publicité délivrée par le serveur de publicité, et envoyer la publicité au module d'envoi de publicité.

12. Client de publicité selon l'une quelconque des revendications 9 à 11, comprenant en outre : un module de mémorisation de politique (209) et un module de mémorisation de publicité (210), dans lequel :
le module de mémorisation de politique (209) est adapté pour recevoir une politique de distribution de publicité délivrée par un serveur de publicité dans un mode préétabli de déclenchement par le temps et de déclenchement par un événement, et actualiser la politique de distribution de publicité mémorisée ; et
le module de mémorisation de publicité (210) est adapté pour recevoir une publicité délivrée par le serveur de publicité dans un mode préétabli de déclenchement par le temps et de déclenchement par un événement, et actualiser la politique de publicité mémorisée.

13. Système de présentation d'une publicité, comprenant : un client d'application selon la revendication 8 et un client d'application selon l'une quelconque des revendications 9 à 12.

14. Système selon la revendication 13, comprenant : un serveur de publicité, le serveur de publicité (4) comprenant : un module de gestion de politique (42), une base de données de publicités (43) et un module de gestion de publicité (44), dans lequel le module de gestion de politique (42) est adapté pour lire une politique de distribution de publicité à partir d'une base de données de politiques dans un mode préétabli de déclenchement par le temps et de déclenchement par un événement, et délivrer la politique de distribution de publicité à un client de publicité ; ou à la réception d'une requête de politique depuis le client de publicité, le module de gestion de politique est adapté pour lire une politique de distribution de publicité à partir de la base de données de politiques en fonction de la requête de politique, et délivrer la politique de distribution de publicité au client de publicité :
la base de données de publicités (43) est adaptée pour mémoriser diverses publicités ; et
le module de gestion de publicité (44) est adapté pour lire une publicité à partir de la base de données de publicités dans un mode préétabli de déclenchement par le temps et de déclenchement par un événement, et délivrer la publicité au client de publicité ;
ou à la réception d'une requête de publicité depuis le client de publicité, le module de gestion de publicité est adapté pour lire une publicité à partir de la base de données de publicités en fonction de la requête de publicité, et délivrer la publicité au client de publicité.

15. Système selon l'une quelconque des revendications 13 et 14, le serveur de publicité comprenant en outre :
la base de données de politiques (41), adaptée pour mémoriser des politiques de distribution de publicité envoyées par un fournisseur de services, SP.

16. Système selon l'une quelconque des revendications 13 à 15, comprenant en outre : un fournisseur de services, SP (3), le SP comprenant en outre : un module de négociation de politique (31) et un module de délivrance d'application (32), dans lequel
le module de négociation de politique (31) est adapté pour négocier avec un serveur de publicité afin d'établir différentes politiques de distribution de publicité pour différents utilisateurs ou groupes d'utilisateurs et établir différentes politiques de distribution de publicité pour le même utilisateur ou groupe d'utilisateurs dans différents scénarios d'application, et envoyer les politiques de distribution de publicité au serveur de publicité ; et
le module de délivrance d'application (32) est adapté pour fournir un contenu d'application à un client d'application.
